# EUROPEAN PATENT APPLICATION

(11) **EP 4 518 403 A1**
(43) Date of publication of application: **05.03.2025**
(21) Application number: 23818939.3
(22) Date of filing: 24.05.2023
(51) Int. Cl.: H04W 24/02, H04W 28/08

(54) **INTENT MANAGEMENT METHOD AND APPARATUS**

(30) Priority: 10.06.2022 CN 202210654560
(71) Applicant: Huawei Technologies Co., Ltd., Shenzhen, Guangdong 518129 (CN)
(72) Inventor: SHI, Xiaoli, Shenzhen, Guangdong 518129 (CN); XU, Ruiyue, Shenzhen, Guangdong 518129 (CN)
(74) Representative: Pfenning, Meinig & Partner mbB
(86) International application number: PCT/CN2023/095992
(87) International publication number: WO 2023/236774

(57) **Abstract**

This application provides an intent management method and an apparatus. The method includes: A second network management device determines an expectation target and an expectation object, where the expectation target is user quality of experience that the expectation object needs to satisfy, and the expectation object includes at least one of the following: an area, a user group, a user, a service, and a network. The second network management device sends the expectation target and the expectation object to a first network management device. Correspondingly, the first network management device receives the expectation target and the expectation object. The first network management device manages a network to satisfy the expectation target. According to the intent management method and the apparatus provided in this application, the user quality of experience can be improved.

## Description

This application claims priority to Chinese Patent Application No. 202210654560.3, filed with the China National Intellectual Property Administration on June 10, 2022 and entitled "INTENT MANAGEMENT METHOD AND APPARATUS", which is incorporated herein by reference in its entirety.

### TECHNICAL FIELD

This application relates to the wireless communication field, and more specifically, to an intent management method and an apparatus.

### BACKGROUND

An intent-driven management service (management service, MnS) architecture includes an MnS consumer (consumer) and an intent-driven MnS producer (producer). The MnS consumer sends an intent to the MnS producer, and the MnS producer manages a network to satisfy the intent. In a possible implementation, the MnS consumer sends an intent to the MnS producer, where the intent is load balancing in a specific area. The MnS producer determines a radio resource management policy at a granularity of a cell, and manages load balancing of each cell in the specific area, to implement load balancing in the specific area.

### SUMMARY

This application provides an intent management method and an apparatus, to improve user quality of experience.

According to a first aspect, an intent management method is provided. The method may be performed by a first network management device, or may be performed by a component (for example, a chip or a circuit) of the first network management device. This is not limited in this application. For ease of description, the following uses an example in which the method is performed by the first network management device for description.

The method may include: The first network management device receives an expectation object and an expectation target from a second network management device, where the expectation target is user quality of experience that the expectation object needs to satisfy, and the expectation object includes at least one of the following: an area, a user group, a user, a service, and a network. The first network management device manages a network to satisfy the expectation target.

In the foregoing solution, the expectation target sent by the first network management device to the second network management device is the user quality of experience that the expectation object needs to satisfy. The first network management device manages the network to satisfy the expectation target, so that quality of experience of a user associated with the expectation object can be ensured, and network experience of the user can be improved.

With reference to the first aspect, in some implementations of the first aspect, the method further includes: The first network management device receives a second context from the second network management device, where the second context includes at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

In the foregoing solution, the second context may assist the first network management device in translating an intent and identifying the expectation target, so that the first network management device more accurately provides a policy for managing the network, and adjusts a network configuration parameter, to further accurately improve the user quality of experience.

With reference to the first aspect, in some implementations of the first aspect, the method further includes: The first network management device receives user information from the second network management device, where the user information is information about the user associated with the expectation object. That the first network management device manages a network to satisfy the expectation target includes: The first network management device manages the network based on the user information to satisfy the expectation target.

In the foregoing solution, based on the user information, the first network management device can more accurately provide the policy for managing the network, and adjust the network configuration parameter, to further improve the user quality of experience.

According to a second aspect, an intent management method is provided. The method may be performed by a second network management device, or may be performed by a component (for example, a chip or a circuit) of the second network management device. This is not limited in this application. For ease of description, the following uses an example in which the method is performed by the second network management device for description.

The method may include: The second network management device determines an expectation target and an expectation object, where the expectation target is user quality of experience that the expectation object needs to satisfy, and the expectation object includes at least one of the following: an area, a user group, a user, a service, and a network. The second network management device sends the expectation target and the expectation object to a first network management device.

With reference to the second aspect, in some implementations of the second aspect, the method further includes: The second network management device sends a second context to the first network management device, where the second context includes at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

With reference to the second aspect, in some implementations of the second aspect, the method further includes: The second network management device determines that a user associated with the expectation object is associated with user information. The second network management device sends the user information to a first network management device.

According to a third aspect, an intent management apparatus is provided, and includes: a transceiver unit, configured to receive an expectation object and an expectation target from a second network management device, where the expectation target is user quality of experience that the expectation object needs to satisfy, and the expectation object includes at least one of the following: an area, a user group, a user, a service, and a network; and a processing unit, configured to manage a network to satisfy the expectation target.

With reference to the third aspect, in some implementations of the third aspect, the transceiver unit is further configured to receive a second context from the second network management device, where the second context includes at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

With reference to the third aspect, in some implementations of the third aspect, the transceiver unit is further configured to receive user information from the second network management device, where the user information is information about a user associated with the expectation object; and the processing unit is specifically configured to manage the network based on the user information to satisfy the expectation target.

According to a fourth aspect, an intent management apparatus is provided, and includes: a processing unit, configured to determine an expectation target and an expectation object, where the expectation target is user quality of experience that the expectation object needs to satisfy, and the expectation object includes at least one of the following: an area, a user group, a user, a service, and a network; and a transceiver unit, configured to send the expectation target and the expectation object to a first network management device.

With reference to the fourth aspect, in some implementations of the fourth aspect, the transceiver unit is further configured to send a second context to the first network management device, where the second context includes at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

With reference to the fourth aspect, in some implementations of the fourth aspect, the processing unit is further configured to determine that a user associated with the expectation object is associated with user information; and the transceiver unit is further configured to send the user information to a first network management device.

In an implementation, the apparatuses provided in the third aspect and the fourth aspect are communication devices. When the apparatus is the communication device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatuses provided in the third aspect and the fourth aspect are chips, chip systems, or circuits used in a communication device. When the apparatus is the chip, the chip system, or the circuit used in the communication device, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fifth aspect, an intent management method is provided, and includes: A second network management device determines an expectation target and an expectation object, where the expectation target is user quality of experience that the expectation object needs to satisfy, and the expectation object includes at least one of the following: an area, a user group, a user, a service, and a network. The second network management device sends the expectation target and the expectation object to a first network management device. The first network management device manages a network to satisfy the expectation target.

With reference to the fifth aspect, in some implementations of the fifth aspect, the method further includes:
The first network management device receives a second context from the second network management device, where the second context includes at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

With reference to the fifth aspect, in some implementations of the fifth aspect, the method further includes: The second network management device determines that a user associated with the expectation object is associated with user information. The second network management device sends the user information to a first network management device. That the first network management device manages a network to satisfy the expectation target includes: The first network management device manages the network based on the user information to satisfy the expectation target.

For beneficial effects brought by the second aspect to the fifth aspect, refer to beneficial effects brought by the first aspect.

With reference to any one of the first aspect to the fifth aspect, in a possible implementation, when the expectation object is the area, the user quality of experience that the expectation object needs to satisfy is user quality of experience that a user or a user group in the area needs to satisfy. When the expectation object is the user group, the user quality of experience that the expectation object needs to satisfy is user quality of experience that a user in the user group needs to satisfy. When the expectation object is the user, the user quality of experience that the expectation object needs to satisfy is user quality of experience that the user needs to satisfy. When the expectation object is the service, the user quality of experience that the expectation object needs to satisfy is user quality of experience that a user who uses the service needs to satisfy. When the expectation object is the network, the user quality of experience that the expectation object needs to satisfy is user quality of experience that a user, a user group, or a service of the network needs to satisfy.

With reference to any one of the first aspect to the fifth aspect, in a possible implementation, when the expectation object is the area, information about the expectation object includes area information, where the area information indicates the area, and the area information includes geographic location information or longitude, latitude, and altitude information. Alternatively, when the expectation object is the user group, information about the expectation object includes a user group identifier, where the user group identifier indicates the user group. Alternatively, when the expectation object is the user, information about the expectation object includes a user identifier, where the user identifier indicates the user. Alternatively, when the expectation object is the service, information about the expectation object includes a service identifier, where the service identifier indicates the service, and the service identifier includes a quality of service flow identifier or a service flow identifier. Alternatively, when the expectation object is the network, information about the expectation object includes a network identifier, where the network identifier indicates the network.

With reference to any one of the first aspect to the fifth aspect, in a possible implementation, the expectation target includes a user quality of experience target, and the user quality of experience target includes at least one of the following: a channel quality indicator, a corruption duration metric, a successive loss of real-time transport protocol packets, a frame rate, jitter duration, synchronization loss duration, round-trip time, an average codec bitrate, call setup time, an average throughput, an initial playout delay, a buffer level, a playout delay for media start-up, an application layer buffer level, corruption duration, rebuffering duration, initial buffering duration, frame rate deviation jitter duration, and content access/switch time.

With reference to any one of the first aspect to the fifth aspect, in a possible implementation, the expectation target further includes a first context, where the first context includes an available physical resource block and/or a signal to interference plus noise ratio.

With reference to any one of the first aspect to the fifth aspect, in a possible implementation, when the expectation object is the area, the first context indicates at least one of the following: a difference between physical resource block utilization rates of cells in the area is less than or equal to a first threshold; a difference between quantities of radio resource connected users in the cells in the area is less than or equal to a second threshold; an average signal to interference plus noise ratio of a cell in the area is greater than or equal to a third threshold; and an average signal to interference plus noise ratio of the user in the area is greater than or equal to a fourth threshold. When the expectation object is the user group, the first context indicates at least one of the following: an average signal to interference plus noise ratio of the user group is greater than or equal to a fifth threshold; and an average signal to interference plus noise ratio of the user in the user group is greater than or equal to a sixth threshold. When the expectation object is the user, the first context indicates: an average signal to interference plus noise ratio of the user is greater than or equal to a seventh threshold. When the expectation object is the area and the user group, the first context indicates at least one of the following: a difference between physical resource block utilization rates of user groups in the area is less than or equal to an eighth threshold; and a difference between quantities of radio resource connected users in the user groups in the area is less than or equal to a ninth threshold.

In the foregoing solution, the first context may further assist the first network management device in translating the intent and identifying the expectation target, so that the first network management device more accurately provides the policy for managing the network, and adjusts the network configuration parameter, to further improve the user quality of experience.

With reference to any one of the first aspect to the fifth aspect, in a possible implementation, the expectation object and the expectation target indicate: a ratio of a quantity of users in the area who satisfy a user quality of experience target to a quantity of users in the area; a ratio of a quantity of user groups in the area that satisfy a user quality of experience target to a quantity of user groups in the area; a ratio of a quantity of users in the user group who satisfy a user quality of experience target to a quantity of users in the user group; a ratio of a quantity of users who use the service and who satisfy a user quality of experience target to a quantity of users who use the service; the user satisfies a user quality of experience target; an average value of user quality of experience in a preset time satisfies a user quality of experience target; a ratio of a quantity of users in the area who use the service and who satisfy a user quality of experience target to a quantity of users in the area who use the service; a ratio of a quantity of users in the user group who use the service and who satisfy a user quality of experience target to a quantity of users in the user group who use the service; the user who uses the service satisfies a user quality of experience target; an average value of quality of experience of the user who uses the service in a preset time period satisfies a user quality of experience target; a ratio of a quantity of users of the network who satisfy a user quality of experience target to a quantity of users of the network; or a ratio of a quantity of user groups of the network that satisfy a user quality of experience target to a quantity of user groups of the network.

With reference to any one of the first aspect to the fifth aspect, in a possible implementation, the user information includes at least one of the following: information about a vehicle-to-everything user, information about an uncrewed aerial vehicle user, and information about a wireless network user. The information about the vehicle-to-everything user includes user identification information, user location information, user movement trajectory information, and user navigation information. The information about the uncrewed aerial vehicle user includes user identification information, uncrewed aerial vehicle flight path information, climate information, no-fly zone information, and flight zone load information. The information about the wireless network user includes user identification information, user movement trajectory information, user mobility information, a user priority, and a user service type.

According to a sixth aspect, a communication apparatus is provided. The apparatus includes at least one processor, configured to execute a computer program or instructions stored in a memory, to perform the method according to any one of the possible implementations of the first aspect or the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a first network management device or a second network management device).

In another implementation, the apparatus is a chip, a chip system, or a circuit used in a communication device (for example, a first network management device or a second network management device).

According to a seventh aspect, this application provides a processor, configured to perform the method provided in the first aspect or the second aspect.

Unless otherwise specified, or if operations such as sending and obtaining/receiving related to the processor do not contradict an actual function or internal logic of the processor in related descriptions, the operations may be understood as operations such as outputting, receiving, and inputting of the processor, or may be understood as sending and receiving operations performed by a radio frequency circuit and an antenna. This is not limited in this application.

According to an eighth aspect, an intent management system is provided, and includes a first network management device and a second network management device, where the first network management device is configured to perform the method according to any one of the possible implementations of the first aspect, and the second network management device is configured to perform the method according to any one of the possible implementations of the second aspect.

According to a ninth aspect, a computer-readable storage medium is provided. The computer-readable medium stores program code to be executed by a device, and the program code includes the method according to any one of the possible implementations of the first aspect or the second aspect.

According to a tenth aspect, a computer program product including instructions is provided. When the computer program product runs on a computer, the computer is enabled to perform the method according to any one of the possible implementations of the first aspect or the second aspect.

### BRIEF DESCRIPTION OF DRAWINGS

FIG. 1 is a diagram of an intent-driven management service architecture to which an embodiment of this application is applicable;
FIG. 2 shows examples of roles related to network and network slice management;
FIG. 3 is a diagram of a management entity to which an embodiment of this application is applicable;
FIG. 4 is a diagram of a service-based management architecture to which an embodiment of this application is applicable;
FIG. 5 is a diagram of an intent management method 100 according to an embodiment of this application;
FIG. 6 is a diagram of an intent management architecture to which an embodiment of this application is applicable;
FIG. 7 is a diagram of an intent management method 200 according to an embodiment of this application;
FIG. 8 is a diagram of an intent management apparatus to which this application is applicable;
FIG. 9 is a diagram of another intent management apparatus to which this application is applicable; and
FIG. 10 is a diagram of a chip system to which this application is applicable.

### DESCRIPTION OF EMBODIMENTS

The following describes technical solutions in this application with reference to the accompanying drawings.

Before the technical solutions in this application are described, concepts of an intent and an intent-driven management service (management service, MnS) are first described. The intent specifies expectations for a specific service or a network management workflow, including requirements, targets, and constraints. The intent may provide information about a specific target and may provide some relevant details. The following are some general concepts of the intent.
(1) The intent is usually understandable by humans, also needs to be interpreted by a machine, and has no ambiguity.
(2) The intent focuses more on describing "what" needs to be implemented rather than "how" to achieve an achievement. The intent expresses indicators that need to be implemented rather than how to implement these indicators. This not only reduces a burden on a consumer to understand implementation details, but also leaves room for a producer to explore an alternative option and find the best solution. (3) An expectation expressed in the intent is irrelevant to basic system implementation, a technology, and an infrastructure. An area may be used as a managed object in the expectation that is expressed in the intent and that is irrelevant to the system implementation, the technology, and the infrastructure.
(4) The intent needs to be quantified from network data to measure and evaluate an implementation result.

The intent-driven management service (intent-driven MnS) reduces management complexity, and there is no need to go deep into complex details of an underlying network infrastructure. The intent-driven management service also facilitates efficient network management, especially in a multi-supplier scenario. The intent-driven MnS allows a consumer of the intent-driven MnS to express an intent needed to manage a network and a service. An intent-driven MnS producer interprets the intent as an executable operation for service assurance and deployment. An example of provisioning the intent by using the intent-driven MnS is provided in 3rd generation partnership project (3rd generation partnership project, 3GPP) TS 28.812.

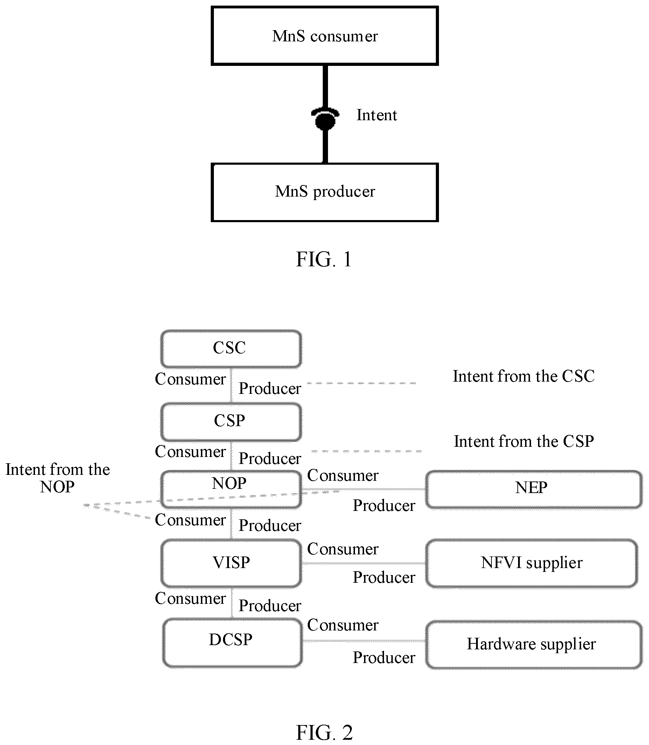

FIG. 1 is a diagram of an intent-driven (intent-driven) MnS architecture to which an embodiment of this application is applicable. As shown in FIG. 1, an intent-driven MnS consumer sends an intent to an intent-driven MnS producer. The MnS producer has the following capabilities: (1) verifying the intent; (2) converting the received intent into executable operations, where the executable operations include executing a service or network management task, identifying, formulating, and activating a service or network management policy, and the like; and (3) evaluating a result/information related to intent fulfilment (for example, whether the intent is initially satisfied) and intent assurance (for example, the intent is continuously satisfied). A first network management device in this application may be understood as the MnS producer in FIG. 1, and a second network management device may be understood as the MnS consumer in FIG. 1.

Usually, intents may be classified into several types in different classification manners. For example, the intents may be classified based on intent levels. For example, in an intent hierarchy in a 3GPP operator domain, the intents may be classified into the following types: a communication service consumer (communication service customer, CSC) intent from a user, a communication service provider (communication service provider, CSP) intent oriented to a communication service provider, and a network operator (network operator, NOP) intent from a network operator.

Based on roles related to 5th generation (5th generation, 5G) network and network slice management defined in clause 4.8 in 3GPP TS 28.312, different types of standardized reference interfaces are applicable to different types of intents. FIG. 2 shows examples of roles related to network and network slice management. Example 1: A subject of an intent from a CSC (intent from communication service customer, Intent-CSC) is the CSC, where the CSC serves as a consumer, and a CSP serves as a producer. The consumer expresses, through a management interface, an intent related to a communication service without knowing details of network and service operations, and obtains feedback information about whether the intent can be satisfied. For example, the Intent-CSC may be "enabling a V2X communication service for a group of vehicles within specific time". Example 2: A subject of an intent from the CSP (intent from communication service provider, Intent-CSP) is the CSP, where the CSP serves as a consumer, and a NOP serves as a producer. The producer converts the received CSC intent into an intent of entire network management, decomposes the intent to a wireless domain, a transport domain, and a core network domain, and delivers the intent. For example, the Intent-CSP may be "providing a network service supporting V2X communication for a highway 417, to support 500 vehicles simultaneously". Example 3: The NOP may serve as a consumer, and a network equipment provider (network equipment provider, NEP) may serve as a producer. The NOP may serve as the consumer, and a virtualization infrastructure service provider (virtualization infrastructure service provider, VISP) serves as the producer. The producer converts the received CSP intent into a network equipment management requirement or a virtualization infrastructure resource requirement to be performed by a device. For example, the Intent-NOP may be "providing a radio network service to satisfy a specific coverage requirement and a user equipment (user equipment, UE) throughput requirement in a specific area". Example 4: The VISP may serve as a consumer to send an intent to a producer. For example, the VISP serves as the consumer, and a network function virtualization infrastructure (network function virtualization infrastructure, NFVI) solution supplier (supplier) serves as the producer. For another example, the VISP serves as the consumer, and a data center service provider (data center service provider, DCSP) serves as the producer. Example 5: The DCSP may serve as a consumer to send an intent to a producer. For example, the DCSP serves as the consumer, and a hardware supplier (hardware supplier) serves as the producer.

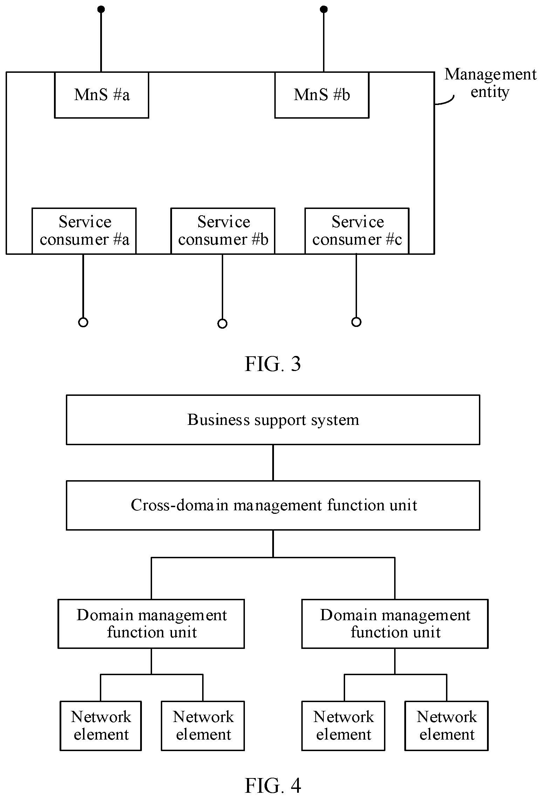

FIG. 3 is a diagram of a management entity to which an embodiment of this application is applicable. The management entity may be a management entity defined in 3GPP, and an externally visible behavior and interface of the management entity are defined as an MnS. The management entity may serve as an MnS producer, and the MnS generated by the management entity may be provided to a plurality of MnS consumers. The management entity may also serve as an MnS consumer, and the MnS consumer may obtain a management service from one or more MnS producers. For example, the management entity may be a management function (management function, MnF). MnSs such as an MnS #a and an MnS #b shown in FIG. 3 produced by an MnF MnS producer may be provided to a plurality of consumers. MnF MnS consumers such as a service consumer #a, a service consumer #b, and a service consumer #c shown in FIG. 3 may consume a plurality of management services from one or more management service producers. FIG. 3 shows an example in which the MnF plays two roles (the MnS producer and the MnS consumer) simultaneously.

FIG. 4 is a diagram of a service-based management architecture to which an embodiment of this application is applicable. The service-based management architecture includes a business support system (business support system, BSS), a cross-domain management function (cross-domain management function, CD-MnF) unit, a domain management function (domain management function, Domain-MnF) unit, and a network element (element). It should be understood that the cross-domain management function unit may be a node like a cross-domain management function unit, a network management system (network management system, NMS), an MnS producer, or an MnS consumer. The domain management function unit may be a node like a network element management system (element management system, EMS), a wireless automation engine (MBB automation engine, MAE), an MnS producer, or an MnS consumer.

If an MnS is an MnS provided by the cross-domain management function unit, the cross-domain management function unit is the MnS producer, and the business support system is the MnS consumer.

If an MnS is an MnS provided by the domain management function unit, the domain management function unit is the MnS producer, and the cross-domain management function unit is the MnS consumer.

If an MnS is an MnS provided by the network element, the network element is the MnS producer, and the domain management function unit is the MnS consumer.

The business support system is oriented to a communication service (communication service), and is used to provide functions and management services such as charging, settlement, accounting, a customer service, business, network monitoring, life cycle management of a communication service, and translation of a service intent. The business support system may be an operating system of an operator or an operating system of a vertical industry (vertical OT system).

The cross-domain management function unit is also referred to as a network management function (network management function, NMF) unit. For example, the cross-domain management function unit may be a network management entity like the network management system (network management system, NMS) or a network function management service consumer (network function management service consumer, NFMS_C). The cross-domain management function unit provides one or more of the following management functions or management services: life cycle management of a network, deployment of a network, fault management of a network, performance management of a network, configuration management of a network, assurance of a network, an optimization function of a network, translation of an intent from a communication service provider (intent from communication service provider, Intent-CSP), and the like.

The network indicated by the management function or the management service may include one or more network elements or sub-networks, or may be a network slice. In other words, the network management function unit may be a network slice management function (network slice management function, NSMF) unit, a cross-domain management data analytics function (management data analytics function, MDAF) unit, a cross-domain self-organization network function (self-organization network function, SON Function) unit, or a cross-domain intent management function unit.

Optionally, in some deployment scenarios, the cross-domain management function unit may further provide life cycle management of a sub-network, deployment of a sub-network, fault management of a sub-network, performance management of a sub-network, configuration management of a sub-network, assurance of a sub-network, an optimization function of a sub-network, translation of a network intent of a sub-network service producer (Intent-CSP) or translation of a sub-network intent from a communication service consumer (intent from communication service consumer, Intent-CSC), and the like. The sub-network herein includes a plurality of small sub-networks, and may be a network slice sub-network.

The domain management function (domain management function, Domain-MnF) unit is also called a sub-network management function (network management function, NMF) unit or a network element management function unit. For example, the domain management function unit may be a network element management entity like the wireless automation engine (MBB automation engine, MAE), the network element management system (element management system, EMS), or a network function management service provider (network function management service provider, NFMS_P).

The domain management function unit provides one or more of the following functions or management services: life cycle management of a sub-network or a network element, deployment of a sub-network or a network element, fault management of a sub-network or a network element, performance management of a sub-network or a network element, assurance of a sub-network or a network element, an optimization function of a sub-network or a network element, translation of an intent from a sub-network or a network element (intent from network operator, Intent-NOP), and the like. The sub-network herein includes one or more network elements. The sub-network may also include a sub-network, in other words, one or more sub-networks form a larger sub-network.

Optionally, the sub-network herein may also be a network slice sub-network. A domain management system may be a network slice subnet management function (network slice subnet management function, NSSMF) unit, a domain management data analytics function (management data analytics function, Domain MDAF) unit, a domain self-organization network function (self-organization network function, SON Function) unit, a domain intent management function unit Intent Driven MnS, or the like.

The domain management function unit may be classified in the following manners, including:
By network type, the domain management function unit may be classified as follows: an access network domain management function (radio access network domain management function, RAN-Domain-MnF) unit, a core network domain management function (core network domain management function, CN-Domain-MnF) unit, a transport network domain management function (transport network domain management function, TN-Domain-MnF) unit, and the like. It should be noted that the domain management function unit may also be a domain network management system, and may manage one or more of an access network, a core network, or a transport network.

By administrative region, the domain management function unit may be classified as follows: a domain management function unit of a region, for example, a domain management function unit of Shanghai, a domain management function unit of Beijing, or the like.

The network element is an entity that provides a network service, and includes a core network element, an access network element, and the like. The core network element includes an access and mobility management function (access and mobility management function, AMF), a session management function (session management function, SMF), a policy control function (policy control function, PCF), a network data analytics unit (network data analytics function, NWDAF), a network warehouse unit (NF Repository Function, NRF), a gateway, and the like. The access network element includes a base station (for example, a gNB or an eNB), a central unit control plane (central unit control plane, CUCP), a central unit (central unit, CU), a distributed unit (distributed unit, DU), a central unit user plane (central unit user plane, CUUP), and the like.

The network element may provide one or more of the following management functions or management services: life cycle management of a network element, deployment of a network element, fault management of a network element, performance management of a network element, assurance of a network element, an optimization function of a network element, translation of an intent from a network element, and the like.

Currently, in a possible intent management manner, the MnS consumer sends an intent to the MnS producer, and the intent is load balancing in a specific area. The MnS producer determines a radio resource management policy at a granularity of a cell, and manages load balancing of each cell in the specific area, to implement load balancing in the specific area. In this implementation, a performance policy in which a cell in an area is used as a center is mainly considered, and evaluation of user performance is not considered. Consequently, when load balancing is implemented, the user performance may be reduced, and user experience may be affected.

To better understand embodiments of this application, the following describes some technical terms in this application.

### 1. Quality of experience (quality of experience, QoE) indicator

### (1) Service-unaware QoE indicator:

An application layer buffer level (applicationlayerBufferLevel) and an initial playout delay (initialPlayoutDelay) are defined in 3GPP TS 38.331.

### (2) Service-aware QoE indicator:

QoE indicators of multimedia telephony (multimedia telephony) are defined in 3GPP TS 26.114, and include: a corruption duration metric (corruption duration metric), a successive loss of real-time transport protocol (real-time transport protocol, RTP) packets (successive loss of RTP packets), a frame rate (frame rate), jitter duration (jitter duration), synchronization loss duration (sync loss duration), round-trip time (round-trip time), an average codec bitrate (average codec bitrate), codec information (codec information), and call setup time (call setup time).

QoE indicators of 3rd generation partnership dynamic adaptive streaming over hyper text transfer protocol (hyper text transfer protocol, HTTP) (3rd generation partnership dynamic adaptive streaming over HTTP, 3 GP-DASH) are defined in 3GPP TS 26.247, and include: representation switch events (representation switch events), an average throughput (average throughput), an initial playout delay (initial playout delay), a buffer level (buffer level), a play list (playlist), media presentation description (media presentation description, MPD) information (MPD Information), and a playout delay for media start-up (playout delay for media start-up). The play list includes a playback speed (playback speed).

QoE indicators of a multimedia broadcast/multicast service (multimedia broadcast/multicast service, MBMS) are defined in 3GPP TS 26.346, and include: corruption duration (corruption duration), rebuffering duration (rebuffering duration), initial buffering duration (initial buffering duration), a successive loss of RTP packets (successive loss of RTP packets), frame rate deviation jitter duration (frame rate deviation jitter duration), content access/switch time (content access/switch time), and a network resource (network resource).

A QoE indicator of 5G media streaming (5G media streaming, 5GMS) is defined in 3GPP TS 26.512. For details, refer to the definition of the QoE indicators in TS 26.247.

A QoE indicator of virtual reality (virtual reality, VR) is defined in 3GPP TS 26.118. For details, refer to the definition of the QoE indicators in TS 26.247.

### (3) A channel quality indicator (channel quality indicator, CQI) is used as a QoE indicator in this application:

When a signal to interference plus noise ratio (signal to interference plus noise ratio, SINR) of a synchronization signal block (synchronization signal block, SSB) of a user is poor, for example, 3 dB or less or 0 dB or less, CQI quality is usually poor, and there is a linear relationship between the SINR of the SSB and the CQI. Therefore, when the CQI is poor, QoE of the user is usually poor. When the SINR of the SSB is good, the CQI quality is not necessarily good. The CQI quality depends on whether coverage of the SSB is consistent with a channel state information reference signal (channel state information reference signal, CSI-RS) and whether a user, load, interference, or the like exists in a neighboring cell. Therefore, when the CQI is good, it may be considered that the QoE experience of the user is good. Therefore, in this application, the CQI is used as the QoE indicator.

### 2. External application server

The external application server communicates with a second network management device in this application, and is configured to provide the second network management device with a user quality of experience target and/or user information.

For example, the external application server is a vehicle-to-everything (vehicle-to-everything, V2X) application server, an uncrewed aerial vehicle (Uncrewed Aerial Vehicle, UAV) application server, an external application (application, APP), a wireless network (for example, a core network), a network management entity, a base station, or the like.

### 3. User

The user in this application may also be referred to as a terminal device. For example, the terminal device may be user equipment (user equipment, UE), a mobile station (mobile station, MS), a mobile terminal (mobile terminal, MT), an access terminal, a subscriber unit, a subscriber station, a remote station, a remote terminal, a mobile device, a user terminal, a terminal, a wireless communication device, a user agent, a user apparatus, or the like.

The terminal device may be a device that provides voice/data connectivity for a user, for example, a handheld device, a vehicle-mounted device, or the like that has a wireless connection function. Examples of the terminal device are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving or autopilot), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like. This is not limited in this embodiment of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, shoes, and the like. The wearable device is a portable device that is directly worn on the body or integrated into clothes or an accessory of a user. The wearable device is a hardware device, and implements a powerful function through software support, data exchange, and cloud interaction. In a broad sense, intelligent wearable devices include full-featured and large-size devices that can implement complete or partial functions without depending on smartphones, for example, smart watches, smart glasses, or the like, and devices that dedicated to only one type of application and need to be used together with other devices such as smartphones, such as various smart bands or smart jewelry used for monitoring physical signs. In addition, in embodiments of this application, the terminal device may alternatively be a terminal device in an internet of things (internet of things, IoT) system.

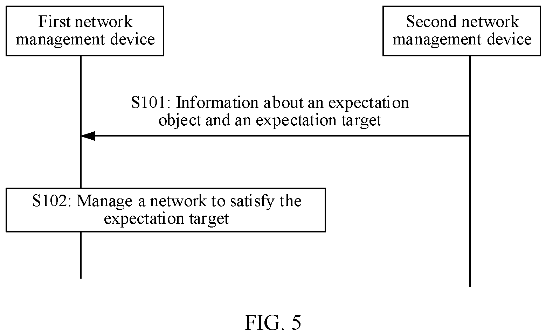

With reference to FIG. 5 to FIG. 7, the following describes an intent management method 100 and an intent management method 200 provided in this application.

FIG. 5 is a diagram of an intent management method 100 according to an embodiment of this application. In the method 100, a first network management device may be, for example, an MnS producer, and a second network management device may be, for example, an MnS consumer.

S101: The first network management device receives an expectation object and an expectation target from the second network management device. Correspondingly, the second network management device sends the expectation target and the expectation object to the first network management device.

Optionally, before S101, the second network management device determines the expectation object and/or the expectation target.

The expectation target is user quality of experience that the expectation object needs to satisfy, and the expectation object includes at least one of the following: an area, a user group, a user, a service, and a network. The expectation object may be represented by information about the expectation object. For example, when the expectation object is the area, the area may be a geographic area (for example, an area including longitude and latitude coordinates, an area including a tracking area (tracking area), a PLMN, or the like). The information about the expectation object may be longitude and latitude coordinates or a longitude and latitude coordinate list, a tracking area (tracking area, TA) identifier or a TA list, a PLMN identifier or a PLMN identifier list, or the like. Alternatively, the area may be a logically divided area (for example, a cell, an area corresponding to a carrier or an area corresponding to a frequency band) or the like. The information about the expectation object may be a cell identifier or a cell identifier list, a carrier identifier or a carrier identifier list, a frequency band identifier or a frequency band identifier list, or the like. When the expectation object is the user, the information about the expectation object may be a user identifier, for example, a UE identity (identity, ID), a temporary mobile subscriber identity (temporary mobile subscriber identity, TMSI), an international mobile subscriber identity (international mobile subscriber identity, IMSI), a cell-radio network temporary identifier (cell-radio network temporary identifier, C-RNTI), an identifier allocated by a radio access network (radio access network, RAN) device to UE, or the like. When the expectation object is the user group, the information about the expectation object may be a UE group (group) ID, a service profile identifier (service profile identifier, SPID), a UE group identifier allocated by the MnS consumer to the user group, a UE group identifier allocated by a base station to the user group, or the like. When the expectation object is the service, the service may be a V2X service, a UAV service, a radio network service, or the like, and the information about the expectation object may be a service identifier, for example, a QoS flow ID. When the expectation object is the network, the information about the expectation object may be a sub-network (sub-network) identifier or a network slice identifier, for example, a data network (data network, DN) of a sub-network. It should be noted that the user in this application may be a user in connected state and/or a user in idle state.

It should be further noted that, if the UE group identifier is allocated by the base station to the user group, the MnS consumer and the MnS producer need to be notified of the UE group identifier.

Alternatively, the expectation target is user quality of experience that a user associated with the expectation object needs to satisfy. There may be the following several understandings for the user associated with the expectation object. When the expectation object is the area, the user associated with the expectation object is a user or a user group in the area. When the expectation object is the user group, the user associated with the expectation object is a user in the user group. When the expectation object is the user, the user associated with the expectation object is the user. When the expectation object is the service, the user associated with the expectation object is a user who uses the service. When the expectation object is the network, the user associated with the expectation object is a user or a user group of the network. It should be further noted that, when the expectation object is the service, the user associated with the expectation object is a user who uses the service in a specific network, a specific area, or a specific user group.

The expectation target includes a user quality of experience target, and the user quality of experience target may include at least one of the following indicators: a channel quality indicator, a corruption duration metric, a successive loss of real-time transport protocol packets, a frame rate, jitter duration, synchronization loss duration, round-trip time, an average codec bitrate, call setup time, an average throughput, an initial playout delay, a buffer level, a playout delay for media start-up, an application layer buffer level, corruption duration, rebuffering duration, initial buffering duration, frame rate deviation jitter duration, and content access/switch time. For details, refer to the descriptions of the "QoE indicator" in the foregoing technical terms.

Specifically, a service-unaware user quality of experience target may include the application layer buffer level and the initial playout delay, and a service-aware user quality of experience target may include: the corruption duration metric, the successive loss of real-time transport protocol packets, the frame rate, the jitter duration, the synchronization loss duration, the round-trip time, the average codec bitrate, the call setup time, the average throughput, the initial playout delay, the buffer level, the playout delay for media start-up, the application layer buffer level, the corruption duration, the rebuffering duration, the initial buffering duration, the frame rate deviation jitter duration, and the content access/switch time.

In the service-aware user quality of experience target, a user quality of experience target of a multimedia telephony service may include: the corruption duration metric, the successive loss of real-time transport protocol packets, the frame rate, the jitter duration, the synchronization loss duration, the round-trip time, the average codec bitrate, and the call setup time. A user quality of experience target of a 3GP-DASH service, a 5GMS service, or a VR service may include: the average throughput, the initial playout delay, the buffer level, and the playout delay for media start-up. A user quality of experience target of an MBMS service may include: the corruption duration, the rebuffering duration, the initial buffering duration, the successive loss of real-time transport protocol packets, the frame rate deviation jitter duration, and the content access/switch time.

For example, the expectation target may include one or more of the following: a target name (targetName), a target condition (targetCondition), and a target value (targetValueRange). For example, the target name herein may be the foregoing indicator, the target value may be a value or a value range, and the target condition may be understood as a condition that the target name and the target value satisfy. The target name may be, for example, a target of the initial playout delay (describing a target of the initial playout delay of the expectation object that applies an intent). The target condition may be, for example, less than, greater than, equal to, less than or equal to, greater than or equal to, or the like.

In a possible implementation, the user quality of experience target may be represented as a condition that the foregoing indicator satisfies, a value range of the foregoing indicator, a value relationship between the foregoing indicator and a threshold, or the like. Alternatively, the user quality of experience target may be represented in another manner. This is not limited in this application. The following provides some examples of the user quality of experience target.

In the service-aware or service-unaware user quality of experience target, examples of a target of the application layer buffer level and a target of the initial playout delay are as follows:
Example 1-1: A level of the application layer buffer level (unit: millisecond ms) may be 1 to 10. A lower level of the application layer buffer level indicates a shorter delay. The user quality of experience target (or the target of the application layer buffer level) may be: A value of the application layer buffer level is less than or equal to an expectation threshold #1. For example, if the expectation threshold #1 is 4, a measurement value of the application layer buffer level being less than 4 may be understood as that the user quality of experience is satisfied.

Example 1-2: A value of the initial playout delay (unit: millisecond ms) may be an integer. A smaller value of the initial playout delay indicates a shorter delay. The user quality of experience target (or the target of the initial playout delay) may be: The value of the initial playout delay is less than or equal to an expectation threshold #2. For example, if the expectation threshold #2 is 4, a measurement value of the initial playout delay being less than 4 may be understood as that the user quality of experience is satisfied.

In the service-aware user quality of experience target, examples of targets of the multimedia telephony service, the 3GP-DASH service, the 5GMS service, the VR service, and the MBMS service are as follows:
Example 1-3: User quality of experience of the multimedia telephony service is described by using the successive loss of data packets, the call setup time, and the jitter duration as an example. A value of the successive loss of data packets may be an integer. A smaller value of the successive loss of data packets indicates a shorter delay. The user quality of experience target (or a target of the successive loss of data packets) may be: The value of the successive loss of data packets is less than or equal to an expectation threshold #3. A value of the call setup time (unit: millisecond ms) may be an integer. A smaller value of the call setup time indicates a shorter delay. The user quality of experience target (or a target of the call setup time) may be: A measurement value of the call setup time is less than or equal to an expectation threshold #4. A value of the jitter duration (unit: millisecond ms) may be an integer. A smaller value of the jitter duration indicates a shorter delay. The user quality of experience target (or a target of the jitter duration) may be: A measurement value of the jitter duration is less than or equal to an expectation threshold #5.

Example 1-4: User quality of experience of the 3GP-DASH service is described by using the average throughput and the initial playout delay as an example. The average throughput is an average value of byte quantities of content received in measurement gaps. A value of the average throughput may be an integer. A smaller value of the average throughput indicates a smaller throughput. The user quality of experience target (or a target of the average throughput) may be: A measurement value of the average throughput is greater than or equal to an expectation threshold #6. A value of the initial playout delay (unit: millisecond ms) may be an integer. A smaller value of the initial playout delay indicates a shorter delay. The user quality of experience target (or a target of the initial playout delay) may be: A measurement value of the initial playout delay is less than or equal to an expectation threshold #7.

Example 1-5: User quality of experience of the MBMS service is described by using the rebuffering duration, the initial buffering duration, and the successive loss of data packets as an example. A value of the rebuffering duration (unit: millisecond ms) may be an integer. A smaller value of the rebuffering duration indicates a shorter delay. The user quality of experience target (or a target of the rebuffering duration) may be: A measurement value of the rebuffering duration is less than or equal to an expectation threshold #8. A value of the initial buffering duration (unit: millisecond ms) may be an integer. A smaller value of the initial buffering duration indicates a shorter delay. The user quality of experience target (or a target of the initial buffering duration) may be: A measurement value of the initial buffering duration is less than or equal to an expectation threshold #9. A value of the successive loss of data packets may be an integer. A smaller value of the successive loss of data packets indicates a shorter delay. The user quality of experience target (or a target of the successive loss of data packets) may be: A measurement value of the successive loss of data packets is less than or equal to an expectation threshold #10.

In a user quality of experience target of the channel quality, an example of a target of the channel quality indicator is as follows:
Example 1-6: A level of the channel quality indicator may be 0 to 15. A lower level indicates poorer channel quality. The user quality of experience target (or the target of the channel quality indicator) may be: A value of the channel quality indicator is less than or equal to an expectation threshold #11. For example, if the expectation threshold #11 is 4, a measurement value of the channel quality indicator being less than or equal to 4 may be understood as that the user quality of experience is satisfied.

In addition, for examples of user quality of experience targets of the 5GMS and the VR, refer to Example 1-4. Details are not described herein again.

The following further describes several possible cases of the user quality of experience that the expectation object needs to satisfy.

Case 1: The expectation object is the area, and the user quality of experience that the expectation object needs to satisfy is user quality of experience that a user or a user group in the area needs to satisfy.

Case 2: The expectation object is the user group, and the user quality of experience that the expectation object needs to satisfy is user quality of experience that a user in the user group needs to satisfy.

Case 3: The expectation object is the user, and the user quality of experience that the expectation object needs to satisfy is user quality of experience that the user needs to satisfy.

Case 4: The expectation object is the service, and the user quality of experience that the expectation object needs to satisfy is user quality of experience that a user who uses the service needs to satisfy. It should be noted that, when the expectation object is the service, the user associated with the expectation object is a user who uses the service in a specific network, a specific area, or a specific user group.

Case 5: The expectation object is the network, and the user quality of experience that the expectation object needs to satisfy is user quality of experience that a user, a user group, or a service of the network needs to satisfy.

Another case: a combination of more than two (including two) cases in the foregoing case 1 to case 5.

In an example, the second network management device may determine the expectation object and the expectation target based on a user quality of experience target of an external application server, or determine the expectation object and the expectation target based on preconfigured information. Alternatively, the second network management device may determine the expectation object and the expectation target in another manner. This is not limited in this application.

For example, the expectation target and the expectation object may be carried in an intent.

For example, the expectation object and the expectation target may be carried in an operation of a request sent by the second network management device (the MnS consumer) to the first network management device (the MnS producer) to create an intent instance (Request to create an intent instance) (refer to 3GPP TS 28.312), or carried in another operation or a newly defined operation. This is not limited in this application. The intent instance is an intent that indicates a service experience optimization scenario. Service experience optimization herein may be understood as transferring a specific user, user group, or service from a cell to another cell, transferring a specific user, user group, or service from a carrier to another carrier, or transferring a specific user, user group, or service from an access technology to another access technology, to improve user quality of service experience and balance cell load. Alternatively, service experience optimization may be understood as optimizing a service experience parameter of a specific user or user group, to improve user quality of service experience. A request for creating the intent instance includes a class of an intent object (object class), the expectation object, and the expectation target. It should be noted that the service experience optimization herein may alternatively be another name. This is not limited herein in this application. After receiving the request, the first network management device creates a specific intent instance based on the request. Optionally, the first network management device sends, to the second network management device, a response message for the request for creating the intent instance.

The following provides some examples of the expectation object and the expectation target.

Example 2-1: In correspondence to the foregoing case 1, the expectation object is the area, and the expectation object and the expectation target indicate a ratio of a quantity of users in the area who satisfy the user quality of experience target to a quantity of users in the area.

For example, an area expectation target=(a quantity of users who satisfy the user quality of experience target/a total quantity of users in an area)*100%, or an area expectation target=(a quantity of user groups that satisfy the user quality of experience target/a total quality of user groups in an area)*100%.

It should be noted that, for the user quality of experience target, refer to the foregoing descriptions. Details are not described herein again. The quantity of users may be a total quantity of users in connected state and/or users in idle state.

Example 2-2: In correspondence to the foregoing case 2, the expectation object is the user group, and the expectation object and the expectation target indicate a ratio of a quantity of users in the user group who satisfy the user quality of experience target to a quantity of users in the user group.

For example, a user group expectation target=(a quantity of users who satisfy the user quality of experience target/a total quantity of users in a user group)*100%.

It should be noted that, for the user quality of experience target, refer to the foregoing descriptions. Details are not described herein again. The quantity of users may be a total quantity of users in connected state and/or users in idle state.

Example 2-3: In correspondence to the foregoing case 4, the expectation object is the service, and the expectation object and the expectation target indicate a ratio of a quantity of users who use the service and who satisfy the user quality of experience target to a quantity of users who use the service.

For example, a service expectation target=(a quantity of users who use a service and who satisfy the user quality of experience target/a total quantity of users who use the service)*100%. It should be understood that the total quantity of users who use the service may be a quantity of users counted in an area, a network, or a user group.

It should be noted that, for the user quality of experience target, refer to the foregoing descriptions. Details are not described herein again. The quantity of users may be a total quantity of users in connected state and/or users in idle state.

Example 2-4: In correspondence to the foregoing case 3, the expectation object is the user, and the expectation object and the expectation target indicate that the user (namely, the expectation object) satisfies the user quality of experience target, indicate that the user satisfies the user quality of experience target at a preset moment, or indicate that an average value of user quality of experience in a preset time period satisfies the user quality of experience target.

The average value of the user quality of experience in the preset time period may be calculated in the following manner. For example, the preset time period includes m (m≥1 and m is an integer) moments of equal intervals, and values of user quality of experience at the m moments are separately measured. An average value of m measurement values is the average value of the user quality of experience in the preset time period. For another example, the preset time period includes m (m≥1 and m is an integer) moments of equal intervals, and values of user quality of experience at the m moments are separately measured. Assuming that n (1≤n≤m and n is an integer) measurement values in the m measurement values satisfy the user quality of experience target, a value of n/m is the average value of the user quality of experience in the preset time period.

It should be noted that, for the user quality of experience target, refer to the foregoing descriptions. Details are not described herein again. The quantity of users may be a total quantity of users in connected state and/or users in idle state.

Example 2-5: In correspondence to the foregoing case 5, the expectation object is the network, and the expectation object and the expectation target indicate a ratio of a quantity of users of the network who satisfy the user quality of experience target to a quantity of users of the network.

For example, a network expectation target=(a quantity of users who satisfy the user quality of experience target/a total quantity of users in a network)* 100%, or a network expectation target=(a quantity of user groups that satisfy the user quality of experience target/a total quality of user groups in a network)* 100%.

It should be noted that, for the user quality of experience target, refer to the foregoing descriptions. Details are not described herein again. The quantity of users may be a total quantity of users in connected state and/or users in idle state.

Example 2-6: In correspondence to the foregoing case 1 and case 4, the expectation object is the area and the service, and the expectation object and the expectation target indicate a ratio of a quantity of users in the area who use the service and who satisfy the user quality of experience target to a quantity of users in the area who use the service.

For example, a service expectation target=(a quantity of users in an area who use a service and who satisfy the user quality of experience target/a total quantity of users in the area who use the service)* 100%.

It should be noted that, for the user quality of experience target, refer to the foregoing descriptions. Details are not described herein again. The quantity of users may be a total quantity of users in connected state and/or users in idle state.

Example 2-7: In correspondence to the foregoing case 2 and case 4, the expectation object is the user group and the service, and the expectation object and the expectation target indicate a ratio of a quantity of users in the user group who use the service and who satisfy the user quality of experience target to a quantity of users in the user group who use the service.

For example, a service expectation target=(a quantity of users in a user group who use a service and who satisfy the user quality of experience target/a total quantity of users in the user group who use the service)*100%.

It should be noted that, for the user quality of experience target, refer to the foregoing descriptions. Details are not described herein again. The quantity of users may be a total quantity of users in connected state and/or users in idle state.

Example 2-8: In correspondence to the foregoing case 3 and case 4, the expectation object is the user and the service, and the expectation object and the expectation target indicate that the user (namely, the expectation object) who uses the service satisfies the user quality of experience target, indicate that the user who uses the service satisfies the user quality of experience target at a preset moment, or indicate that an average value of quality of experience of the user who uses the service in a preset time period satisfies the user quality of experience target.

It should be noted that, for the user quality of experience target, refer to the foregoing descriptions. Details are not described herein again. The quantity of users may be a total quantity of users in connected state and/or users in idle state.

Optionally, the expectation target further includes a first context, and the first context includes an available physical resource block (physical resource block, PRB) and/or a signal to interference plus noise ratio (signal to interference plus noise ratio, SINR). For example, the first context herein may be a target context (target context).

For example, the first context may include a context attribute (contextAttribute), a context condition (contextCondition), and a context value range (contextValueRange). For example, the context attribute may be the foregoing PRB or SINR, the context value range may be a value or a value range, and the context condition may be understood as a condition that the context attribute and the context value range need to satisfy.

In a possible implementation, the first context may be represented as a condition that the PRB or the SINR needs to satisfy, a value range of the PRB or the SINR, a value relationship between the PRB or the SINR and a threshold, or the like. Alternatively, the first context may be represented in another manner. This is not limited in this application.

Further, when the expectation target includes the first context, the expectation target may be understood as: The expectation object needs to satisfy both the user quality of experience and the first context.

It should be understood that the first context may be used to represent the user quality of experience, or may be used to represent an intent (for example, load balancing) other than the user quality of experience. For example, when the first context includes the PRB, the first context may be used to represent load balancing. For another example, when the first context includes the SINR, the first context may alternatively be used to represent the user quality of experience.

The following describes several examples of the first context corresponding to different expectation objects.

Example 3-1: In correspondence to the foregoing case 1, the expectation object is the area, and the first context indicates at least one of the following: a difference between physical resource block utilization rates of cells in the area is less than or equal to a first threshold; a difference between quantities of radio resource connected users in the cells in the area is less than or equal to a second threshold; an average signal to interference plus noise ratio of a cell in the area is greater than or equal to a third threshold; and an average signal to interference plus noise ratio of the user in the area is greater than or equal to a fourth threshold.

For example, the user quality of experience target is that the value of the initial playout delay is less than the expectation threshold #2 (referred to as satisfying the target of the initial playout delay below). The expectation target may be "if a ratio of users in the area who satisfy the target of the initial playout delay>80%, ensure that a difference between PRB utilization rates of cells<5%". The first context is "a difference between PRB utilization rates of cells<5%", and the user quality of experience that the expectation object needs to satisfy is "a ratio of users in the area who satisfy the target of the initial playout delay>80%".

Example 3-2: In correspondence to the foregoing case 2, the expectation object is the user group, and the first context indicates at least one of the following: an average signal to interference plus noise ratio of the user group is greater than or equal to a fifth threshold; and an average signal to interference plus noise ratio of the user in the user group is greater than or equal to a sixth threshold.

Example 3-3: In correspondence to the foregoing case 3, the expectation object is the user, and the first context indicates: an average signal to interference plus noise ratio of the user is greater than or equal to a seventh threshold.

Example 3-4: In correspondence to a combination of the foregoing case 1 and case 2, the expectation object is the area and the user group, and the first context indicates at least one of the following: a difference between physical resource block utilization rates of user groups in the area is less than or equal to an eighth threshold; and a difference between quantities of radio resource connected users in the user groups in the area is less than or equal to a ninth threshold.

For example, the user quality of experience target is the target of the initial playout delay. The expectation target may be "if a ratio of users in the area who satisfy the target of the initial playout delay>80%, ensure that an average SINR of user groups in the area>3 dB". The first context is "an average SINR of user groups in the area >3 dB", and the user quality of experience that the expectation object needs to satisfy is "a ratio of users who satisfy the target of the initial playout delay>80%".

In the foregoing solution, the first context may further assist the first network management device in translating an intent and identifying the expectation target, so that the first network management device more accurately provides a policy for managing the network, and adjusts a network configuration parameter, to further improve the user quality of experience.

S102: The first network management device manages a network to satisfy the expectation target.

For example, the first network management device identifies, based on the expectation object, the expectation target, or an expectation context, a potential network problem that affects expectation target satisfaction, evaluates, decides, and adjusts a network-related configuration parameter, and finally determines a radio resource management policy and/or a network parameter configuration policy of a user. Specifically, the potential network problem may be a load problem (for example, a cell load PRB utilization rate is excessively high), a coverage problem (for example, a weak coverage problem occurs in a cell), a network capacity problem (for example, a throughput of a cell is excessively low), or the like. The radio resource management policy may be a power control policy, a resource scheduling priority adjustment policy, a service guidance adjustment policy, a mobility parameter optimization policy, a carrier aggregation configuration policy, load balancing adjustment policy, or the like. The network parameter configuration policy may be an antenna parameter adjustment policy (for example, a radio frequency antenna parameter), a mobility parameter adjustment policy (for example, a cell individual offset (cell individual offset, CIO)), or the like.

In this embodiment of this application, the expectation target sent by the first network mangement device to the second network management device is the user quality of experience that the expectation object needs to satisfy. The first network management device manages the network to satisfy the expectation target, so that quality of experience of the user associated with the expectation object can be ensured, and network experience of the user can be improved.

Optionally, the method 100 further includes: The second network management device sends a second context to the first network management device. Correspondingly, the first network management device receives the second context from the second network management device.

For example, the second context may be an expectation context (expectation context). The second context includes at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, a forbidden network list, a service priority, an allowed service list, and a forbidden service list.

It may be understood that, when the first network management device receives the expectation target and the second context from the second network management device, the expectation object needs to satisfy both the user quality of experience and the second context.

Example 4-1: In correspondence to the foregoing case 1, the expectation object is the area, and the second context includes at least one of the following: the cell priority, the allowed cell list, the forbidden cell list, the carrier priority, the allowed carrier list, the forbidden carrier list, the frequency band priority, the allowed frequency band list, the forbidden frequency band list, the forbidden user list, the user group priority, the allowed user group list, the forbidden user group list, and the carrier priority.

For example, when the second context is the cell priority, the first network management device preferentially satisfies quality of experience of a user in a cell with a higher priority in the area. For another example, when the second context includes the allowed cell list, during implementation of an intent target, the first network management device can only adjust a user in the allowed cell list, in other words, move a user in the allowed cell list to another cell, carrier, or access technology. Alternatively, the first network management device can only adjust a parameter of a cell in the allowed cell list. In other words, a parameter of a cell in the allowed cell list can be adjusted. For example, a parameter of a cell may be a CIO, a radio frequency parameter, or the like. Alternatively, it may be understood as that the first network management device may only satisfy quality of experience of a user in a cell that belongs to the allowed cell list and that is in the area. For another example, when the second context includes the forbidden cell list, during implementation of an intent target, the first network management device cannot adjust a user in the forbidden cell list. In other words, a user in the forbidden cell list cannot be moved. Alternatively, the first network management device cannot adjust a parameter of a cell in the forbidden cell list. In other words, a parameter of a cell in the forbidden cell list cannot be adjusted. Alternatively, it may be understood as that the first network management device may not satisfy quality of experience of a user in a cell that belongs to the forbidden cell list and that is in the area.

For example, the user quality of experience target is the target of the initial playout delay, and a cell is identified by using a cell global identifier (cell global identifier, CGI). The second network management device may declare: "If a ratio of users who satisfy the target of the initial playout delay>80%, ensure that CGI1, CGI2, CGI3, and the like have cell priorities in descending order." The expectation target is that the ratio of users who satisfy the target of the initial playout delay>80%, and the second context is that CGI1, CGI2, CGI3, and the like have the cell priorities in descending order. It may be understood that, based on the cell priorities indicated by the second context, the first network management device preferentially satisfies an expectation target of a cell corresponding to CGI1, then satisfies an expectation target of a cell corresponding to CGI2, then satisfies an expectation target of a cell corresponding to CGI3, ....

In addition, an implementation in which the second context is the carrier priority, the allowed carrier list, or the forbidden carrier list and an implementation in which the second context is the frequency band priority, the allowed frequency band list, or the forbidden frequency band list are separately similar to the foregoing implementation in which the second context is the cell priority, the allowed cell list, or the forbidden cell list. This is not described herein.

For example, when the second context is the user group priority, the first network management device preferentially satisfies quality of experience of a user in a user group with a higher priority in the area. For another example, when the second context includes the allowed user group list, during implementation of an intent target, the first network management device can only adjust a user in the allowed user group list, in other words, move a user in the allowed user group list to another cell, carrier, or access technology. Alternatively, it may be understood as that the first network management device may only satisfy quality of experience of a user in a user group that belongs to the allowed user group list and that is in the area. For another example, when the second context includes the forbidden user group list, during implementation of an intent target, the first network management device cannot adjust a user in the forbidden user group list. In other words, a user in the forbidden user group list cannot be moved. Alternatively, it may be understood as that the first network management device may not satisfy quality of experience of a user in a user group that belongs to the forbidden user group list and that is in the area.

For example, when the second context is the user priority, the first network management device preferentially satisfies quality of experience of a user with a higher priority in the area. For another example, when the second context includes the allowed user list, during implementation of an intent target, the first network management device can only adjust a user in the allowed user list, in other words, move a user in the allowed user list to another cell, carrier, or access technology. Alternatively, it may be understood as that the first network management device may only satisfy quality of experience of a user who belongs to the allowed user list and who is in the area. For another example, when the second context includes the forbidden user list, during implementation of an intent target, the first network management device cannot adjust a user in the forbidden user list. In other words, a user in the forbidden user list cannot be moved. Alternatively, it may be understood as that the first network management device may not satisfy quality of experience of a user who belongs to the forbidden user list and who is in the area.

Example 4-2: In correspondence to the foregoing case 2, the expectation object is the user group, and the second context includes at least one of the following: the user priority, the allowed user list, and the forbidden user list.

For example, when the second context is the user priority, the first network management device preferentially satisfies quality of experience of a user with a higher priority in the user group. For another example, when the second context includes the allowed user list, during implementation of an intent target, the first network management device can only adjust a user in the allowed user list, in other words, move a user in the allowed user list to another cell, carrier, or access technology. Alternatively, it may be understood as that the first network management device may only satisfy quality of experience of a user who belongs to the allowed user list and who is in the user group. For another example, when the second context includes the forbidden user list, during implementation of an intent target, the first network management device cannot adjust a user in the forbidden user list. In other words, a user in the forbidden user list cannot be moved. Alternatively, it may be understood as that the first network management device may not satisfy quality of experience of a user who belongs to the forbidden user list and who is in the user group.

In the foregoing solution, the second context may assist the first network management device in translating the intent and identifying the expectation target, so that the first network management device more accurately provides the policy for managing the network, and adjusts the network configuration parameter, to further accurately improve the user quality of experience.

Optionally, the method 100 further includes:
The second network management device sends user information to the first network management device. Correspondingly, the first network management device receives the user information from the second network management device.

Further, in S102, the first network management device may translate the intent based on the user information and further with reference to the expectation object and the expectation target, to manage the network to satisfy the expectation target.

The user information is information about a user associated with the expectation object. Alternatively, the user associated with the expectation object herein may be understood as a user corresponding to the expectation object.

It should be understood that, based on different expectation objects, there may be a plurality of examples of the user associated with the expectation object herein.

Example 5-1: In correspondence to the foregoing case 1, the expectation object is the area, and the user associated with the expectation object may be understood as the user or the user group in the area.

Example 5-2: In correspondence to the foregoing case 2, the expectation object is the user group, and the user associated with the expectation object may be understood as the user in the user group.

Example 5-3: In correspondence to the foregoing case 3, the expectation object is the user, and the user associated with the expectation object may be understood as the user.

Example 5-4: In correspondence to the foregoing case 4, the expectation object is the service, and the user associated with the expectation object may be understood as the user who uses the service.

Example 5-5: In correspondence to the foregoing case 5, the expectation object is the network, and the user associated with the expectation object may be understood as the user or the user group of the network.

For example, the user information includes at least one of the following: information about a V2X user, information about an uncrewed aerial vehicle UAV user, and information about a wireless network user.

Specifically, the information about the V2X user includes user identification information, user location information, user movement trajectory information, user navigation information (for example, a speed and a direction of the user), and the like. The user identification information may be, for example, an IMSI, an international mobile equipment identity (international mobile equipment identity, IMEI), a PLMN, or the like.

The information about the UAV user includes user identification information, UAV flight path information, climate information, no-fly zone information, flight zone load information, and the like. The user identification information may be, for example, an IMSI, an IMEI, a PLMN, or the like.

The information about the wireless network user includes user identification information, user movement trajectory information, user mobility information (for example, stillness, a moving speed, and a moving direction), a user priority, a user service type, and the like. The user identification information may be, for example, an IMSI, an IMEI, a PLMN, or the like.

For example, the user information may be sent together with the expectation target, or may be sent separately. This is not limited in this application.

Optionally, before sending the user information to the first network management device, the second network management device may further perform the following step: The second network management device determines that the user associated with the expectation object is associated with the user information.

For example, the second network management device may obtain the user information from the external application server. For example, the user information includes one or more user identifiers (referred to as identifiers #1). The second network management device may associate the identifier #1 with a user identifier (referred to as an identifier #2) that is internally used to identify the user associated with the expectation object. Specifically, a process in which the second network management device obtains the identifier #2 is not limited in this application.

For example, the identifier #2 herein may be understood as the user identifier included in the information about the expectation object corresponding to the foregoing case 3.

In the foregoing solution, the second context may assist the first network management device in translating the intent and identifying the expectation target, so that the first network management device more accurately provides the policy for managing the network, and adjusts the network configuration parameter, to further accurately improve the user quality of experience.

In another possible implementation of the method 100, the second network management device may generate the radio resource management policy based on the user information, the expectation object, and the expectation target, and send the policy to the first network management device. Then, the first network management device manages the network according to the policy.

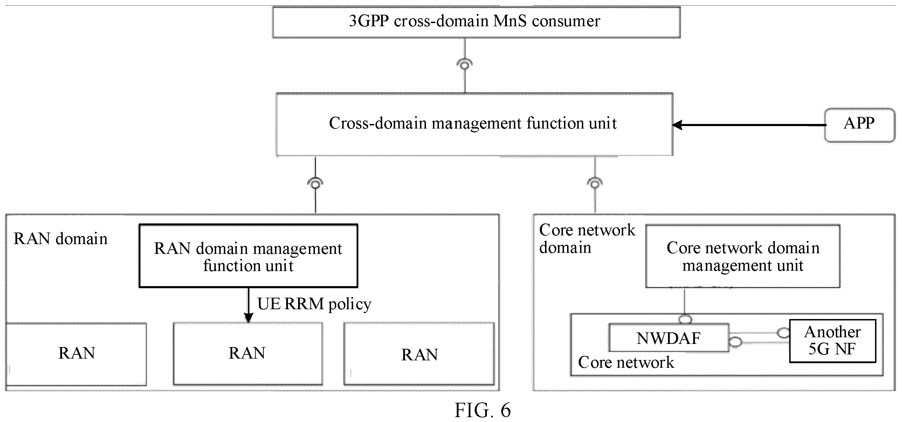

FIG. 6 is a diagram of an intent management architecture to which an embodiment of this application is applicable.

In FIG. 6, a RAN domain management function unit and a core network domain management function unit each may be understood as an example of the domain management function unit in FIG. 4. A cross-domain management function unit manages the RAN domain management function unit and the core network domain management function unit. In a RAN domain, the RAN domain management function unit manages one or more RAN network elements, for example, a base station. In a core network domain, the core network domain management function unit manages one or more core network elements. For example, the core network domain management function unit may communicate with a network data analytics function (network data analytics function, NWDAF) network element in a core network, and the NWDAF communicates with another 5G network function (network function, NF).

In FIG. 6, the cross-domain management function unit is an MnS consumer, and may be understood as an example of a second network management device. The RAN domain management function unit or the core network domain management function unit is an MnS producer, and may be understood as an example of a first network management device.

In a possible implementation 1, the cross-domain management function unit may obtain a QoE target (herein, the QoE target may be a specific example of the user quality of experience target in the method 100) from an external application server APP, and generate an intent based on the QoE target. The intent may be the QoE target, or may be information generated based on the QoE target. For example, the intent includes the expectation object and the expectation target in the method 100. The cross-domain management function unit sends the intent to the RAN domain management function unit. The RAN domain management function unit identifies, based on the intent, a potential network problem that affects expectation target satisfaction and a corresponding solution, generates a UE radio resource management (radio resource management, RRM) policy (policy) or a network parameter configuration policy, and sends the generated policy to one or more RAN network elements. Then, the RAN network element performs network parameter adjustment.

Optionally, the cross-domain management function unit may further receive user information from the external application server APP. The cross-domain management function unit may perform a user association function based on the user information, in other words, associate the user information from the external application server with the intent. In an example, the user information includes one or more identifiers of an IMSI, a TMSI, a C-RNTI, and a GPSI of a user. The identifier included in the user information may be understood as an example of the identifier #1 in the method 100. The cross-domain management function unit may further obtain a user identifier via the core network domain management function unit, where the user identifier may be understood as an example of the identifier #2 in the method 100. The cross-domain management function unit associates the identifier #1 with the identifier #2. Alternatively, the cross-domain management function unit may perform the user association function in another manner. This is not limited in this application. It should be noted that, that the cross-domain management function unit obtains the user identifier from the core network domain management function unit is merely an example. The cross-domain management function unit may alternatively obtain the user identifier in another manner. This is not limited in this application. In addition, the cross-domain management function unit further sends the user information to the RAN domain management function unit. Further, the RAN domain management function unit generates the UE RRM policy or the network parameter configuration policy based on the user information and the intent. The cross-domain management function unit may separately send the user information and the intent, or the cross-domain management function unit may send the user information and the intent together to the RAN domain management function unit. This is not limited in this application.

In a possible implementation 2, the cross-domain management function unit generates the intent with reference to the descriptions in the "possible implementation 1", and the cross-domain management function unit further generates policy information based on the intent. Alternatively, the cross-domain management function unit generates policy information based on a QoE target obtained from an external application server APP. The policy information may be used by the RAN domain management function unit to generate a UE RRM policy or a network parameter configuration policy. The cross-domain management function unit sends the policy information to the RAN domain management function unit. The RAN domain management function unit generates the UE RRM policy or the network parameter configuration policy based on the policy information, and sends the UE RRM policy or the network parameter configuration policy to one or more RAN network elements.

It should be noted that the RAN domain management function unit may send the policy to the RAN network element by using a product. This is not limited in this application.

Optionally, the cross-domain management function unit may further receive user information from the APP. The cross-domain management function unit may perform a user association function based on the user information. For details, refer to the content related to the user association function in the possible implementation 1. In addition, the cross-domain management function unit further sends the user information to the RAN domain management function unit. Further, the RAN domain management function unit generates the UE RRM policy or the network parameter configuration policy based on the user information and the policy information. The cross-domain management function unit may separately send the user information and the policy information, or the cross-domain management function unit may send the user information and the policy information together to the RAN domain management function unit. This is not limited in this application.

It should be noted that content of the user information in the possible implementations 1 and 2 may be understood as examples of the user information in the method 100.

It should be noted that a manner in which the cross-domain management function unit obtains the QoE target or the user information from the APP is merely an example, and does not constitute a limitation on this application. The cross-domain management function unit may alternatively obtain the QoE target or the user information from another external server, for example, obtain the user information from a V2X application server, the core network, a network management entity, a base station, or the like.

For interaction between the cross-domain management function unit and the core network domain management function unit, refer to the foregoing two possible implementations. Details are not described herein.

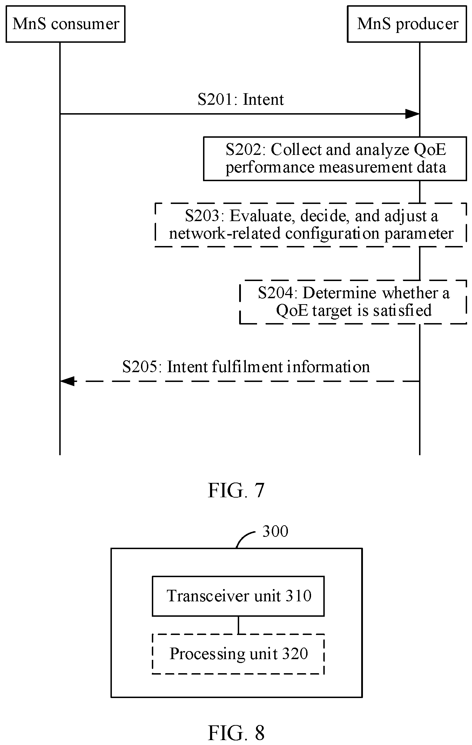

With reference to FIG. 7, the following describes the method 200 by using an example in which a cross-domain management function unit and a RAN domain management function unit respectively serve as an intent-driven consumer and an intent-driven producer. In the method 200, intent management for quality of service optimization is used as an example for description.

FIG. 7 is a diagram of an intent management method 200 according to an embodiment of this application.

S201: An MnS consumer sends an intent to an MnS producer. Correspondingly, the MnS producer receives the intent from the MnS consumer.

For example, the MnS consumer sends, to the MnS producer, a request for creating a quality of service optimization intent instance, where the request includes the intent.

The intent includes an expectation for quality of service optimization to be ensured by a specified area, user group, user, service, or network. It may be understood that the intent includes an intent object and an intent target. The intent object may include the area, the user group, the user, the service, or the network. Correspondingly, the intent target may include an area quality of service optimization expectation, a user quality of service optimization expectation, a user group quality of service optimization expectation, a service quality of service optimization expectation, and a network quality of service optimization expectation. For a target of the quality of service optimization, refer to content related to the user quality of experience target in the method 100. Details are not described herein.

It should be noted that the intent in S201 may be understood as an example of the expectation target and the expectation object in the method 100. Correspondingly, the intent target and the intent object may be respectively understood as an example of the expectation target and an example of the expectation object. For S201, refer to content related to the expectation target and the expectation object in the method 100. Details are not described herein.

It should be further noted that the QoE herein may be understood as the user quality of experience in the method 100. For the method 200, refer to content related to the user quality of experience in the method 100. Details are not described herein.

The following provides an example of the intent in the method 200.
Expectation object ExpectationObject: area scope
Expectation targets ExpectationTargets:
   User initial playout delay ratio (initialPlayoutDelayRatio), where a specific definition example is as follows:
   Target name targetName: "initialPlayoutDelayRatio"
   Target condition targetCondition: "greater than" ("is more than")
   Target value targetValueRange: integer with allowed value [0,100] (integer with allowed value [0,100]).
   Target context targetContext: initial playout delay context initialPlayoutDelayContext
   Context attribute contextAttribute: "PRB utilization threshold" "PRButilizationrateThreshold"
   Context condition contextCondition: "greater than" ("is more than")
   Context value range contextValueRange: Integer (integer) or float (float).
   Expectation context ExpectationContext:
      Cell priority, allowed cell list, and forbidden cell list

The foregoing describes step S201, and the following continues to describe steps S202 to S205. S202 to S205 may be understood as an example of step S102 in the method 100.

S202: Based on the received intent, the MnS producer collects and analyzes QoE measurement data.

The MnS producer confirms feasibility of the intent instance.

For example, the QoE measurement data herein may be a measurement value of the quality of experience indicator in the foregoing "technical terms in this application".

Optionally, in S203, the MnS producer identifies a potential network problem that affects QoE target satisfaction and a corresponding solution, and evaluates, decides, and adjusts a network-related configuration parameter. Specifically, the MnS producer determines a radio resource management policy and/or a network parameter configuration policy, and sends the determined policy to a network element, so that the network element performs optimization and adjustment.

For example, an artificial intelligence technology or a machine learning technology may be used in the foregoing workflow to satisfy the intent.

Optionally, in S204, the MnS producer continuously monitors QoE measurement data in a specified area, and determines whether a QoE target described in the intent is satisfied.

If the QoE target described in the intent is not satisfied, the MnS producer iteratively performs the foregoing workflows S202 to S204 (including collection, identification, analysis, evaluation, decision making, and adjustment) to implement the QoE target.

Optionally, in S205, the MnS producer sends intent fulfilment information to the MnS consumer. Correspondingly, the MnS consumer receives the intent fulfilment information from the MnS producer.

For example, the MnS producer sends, to the MnS consumer, a response message for creating the intent instance, where the message includes the intent fulfilment information.

The intent fulfilment information includes QoE performance in the specified area, so that the MnS consumer can monitor the intent that includes the QoE target.

In this embodiment of this application, the intent management can be performed by using the QoE target as an expectation, to ensure user performance and improve the user quality of experience.

FIG. 8 is a diagram of an intent management apparatus to which this application is applicable. The apparatus 300 includes a transceiver unit 310, and the transceiver unit 310 may be configured to implement a corresponding communication function. The transceiver unit 310 may also be referred to as a communication interface or a communication unit.

Optionally, the apparatus 300 may further include a processing unit 320, and the processing unit 320 may be configured to perform data processing.

Optionally, the apparatus 300 further includes a storage unit. The storage unit may be configured to store instructions and/or data. The processing unit 320 may read the instructions and/or data in the storage unit, to enable the apparatus to implement an action performed by the communication device (for example, the first network management device or the second network management device) in the foregoing method embodiments.

The apparatus 300 may be configured to perform the action performed by the communication device (for example, the first network management device or the second network management device) in the foregoing method embodiments. In this case, the apparatus 300 may be a component of the communication device (for example, the first network management device or the second network management device). The transceiver unit 310 is configured to perform receiving and sending related operations on a side of the communication device (for example, the first network management device or the second network management device) in the foregoing method embodiments, and the processing unit 320 is configured to perform a processing-related operation on the side of the communication device (for example, the first network management device or the second network management device) in the foregoing method embodiments.

In a design, the apparatus 300 is configured to perform an action performed by the first network management device, the MnS producer, the RAN domain management function unit, or the core network domain management function unit in the foregoing method embodiments.

The transceiver unit 310 is configured to receive an expectation object and an expectation target from the second network management device, where the expectation target is user quality of experience that the expectation object needs to satisfy, and the expectation object includes at least one of the following: an area, a user group, a user, a service, and a network. The processing unit 320 is configured to manage a network to satisfy the expectation target.

Optionally, the transceiver unit 310 is further configured to receive a second context from the second network management device, where the second context includes at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

Optionally, the transceiver unit 310 is further configured to receive user information from the second network management device, where the user information is information about a user associated with the expectation object. The processing unit 320 is specifically configured to manage the network based on the user information to satisfy the expectation target.

It should be understood that a specific process in which the units perform the foregoing corresponding steps is described in detail in the foregoing method embodiments. For brevity, details are not described herein again. For related descriptions of the expectation object, the expectation target, the second context, the user information, and the like, refer to the foregoing method embodiments.

In another design, the apparatus 300 is configured to perform an action performed by the second network management device, the MnS consumer, or the cross-domain management function unit in the foregoing method embodiments.

The processing unit 320 is configured to determine an expectation target and an expectation object, where the expectation target is user quality of experience that the expectation object needs to satisfy, and the expectation object includes at least one of the following: an area, a user group, a user, a service, and a network. The transceiver unit 310 is configured to send the expectation target and the expectation object to the first network management device.

Optionally, the transceiver unit 310 is further configured to send a second context to the first network management device, where the second context includes at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

Optionally, the processing unit 320 is further configured to determine that a user associated with the expectation object is associated with user information. The transceiver unit 310 is further configured to send the user information to a first network management device.

It should be understood that a specific process in which the units perform the foregoing corresponding steps is described in detail in the foregoing method embodiments. For brevity, details are not described herein again. For related descriptions of the expectation object, the expectation target, the second context, the user information, and the like, refer to the foregoing method embodiments.

It should be further understood that the apparatus 300 herein is embodied in a form of a function unit. The term "unit" herein may refer to an application specific integrated circuit (application specific integrated circuit, ASIC), an electronic circuit, a processor (for example, a shared processor, a dedicated processor, a group processor, or the like) configured to execute one or more software or firmware programs, a memory, a merged logic circuit, and/or another appropriate component that supports the described function. In an optional example, a person skilled in the art may understand that the apparatus 300 may be specifically the second network management device in the foregoing embodiments, and may be configured to perform procedures and/or steps corresponding to the second network management device in the foregoing method embodiments. Alternatively, the apparatus 300 may be specifically the first network management device in the foregoing embodiments, and may be configured to perform procedures and/or steps corresponding to the first network management device in the foregoing method embodiments. To avoid repetition, details are not described herein again.

The apparatus 300 in the foregoing solutions has a function of implementing corresponding steps performed by the first network management device in the foregoing methods, or the apparatus 300 in the foregoing solutions has a function of implementing corresponding steps performed by the second network management device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit or the like, may be replaced by a processor, to separately perform sending and receiving operations and a related processing operation in the method embodiments.

In addition, the transceiver unit 310 may alternatively be a transceiver circuit (for example, may include a receiving circuit and a sending circuit), and the processing unit may be a processing circuit.

It should be noted that the apparatus in FIG. 8 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

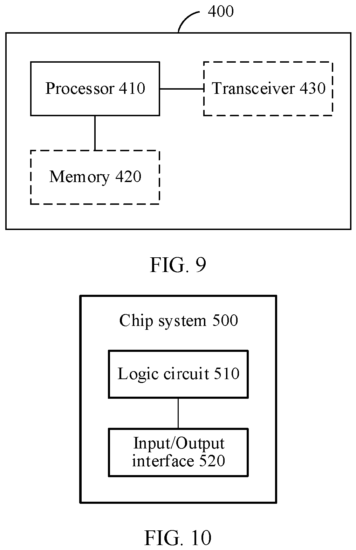

FIG. 9 is a diagram of another intent management apparatus to which this application is applicable. The apparatus 400 includes a processor 410. The processor 410 is coupled to a memory 420. The memory 420 is configured to store a computer program or instructions and/or data. The processor 410 is configured to: execute the computer program or the instructions stored in the memory 420, or read the data stored in the memory 420, to perform the methods in the foregoing method embodiments.

Optionally, there are one or more processors 410.

Optionally, there are one or more memories 420.

Optionally, the memory 420 and the processor 410 are integrated together or disposed separately.

Optionally, as shown in FIG. 9, the apparatus 400 further includes a transceiver 430, and the transceiver 430 is configured to receive and/or send a signal. For example, the processor 410 is configured to control the transceiver 430 to receive and/or send a signal.

In a solution, the apparatus 400 is configured to implement an operation performed by the first network management device in the foregoing method embodiments.

For example, the processor 410 is configured to execute the computer program or instructions stored in the memory 420, to implement a related operation of the first network management device in the foregoing method embodiments, for example, the method performed by the first network management device, the RAN domain management function unit, the core network domain management function unit, or the MnS producer in the embodiments shown in FIG. 5 to FIG. 7.

In a solution, the apparatus 400 is configured to implement an operation performed by the second network management device in the foregoing method embodiments.

For example, the processor 410 is configured to execute the computer program or instructions stored in the memory 420, to implement a related operation of the second network management device in the foregoing method embodiments, for example, the method performed by the second network management device, the cross-domain management function unit, or the MnS consumer in the embodiments shown in FIG. 5 to FIG. 7.

It should be understood that, the processor mentioned in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 10 is a diagram of a chip system to which this application is applicable. The chip system 500 (or may be referred to as a processing system) includes a logic circuit 510 and an input/output interface (input/output interface) 520.

The logic circuit 510 may be a processing circuit in the chip system 500. The logic circuit 510 may be coupled to a storage unit, and invoke instructions in the storage unit, so that the chip system 500 can implement the methods and functions in embodiments of this application. The input/output interface 520 may be an input/output circuit in the chip system 500, and output information processed by the chip system 500, or input to-be-processed data or signaling information to the chip system 500 for processing.

Specifically, for example, if the chip system 500 is installed on the first network management device, the logic circuit 510 is coupled to the input/output interface 520, and the logic circuit 510 may send a message to the second network management device through the input/output interface 520, where the message may be generated by the logic circuit 510. Alternatively, the input/output interface 520 may input a message from the second network management device to the logic circuit 510 for processing. For another example, if the chip system 500 is installed on the second network management device, the logic circuit 510 is coupled to the input/output interface 520, and the logic circuit 510 may send a message to the first network management device through the input/output interface 520, where the message may be generated by the logic circuit 510. Alternatively, the input/output interface 520 may input a message from the second network management device to the logic circuit 510 for processing.

In a solution, the chip system 500 is configured to implement an operation performed by the first network management device in the foregoing method embodiments.

For example, the logic circuit 510 is configured to implement a processing-related operation performed by the first network management device in the foregoing method embodiments, for example, a processing-related operation performed by the first network management device, the RAN domain management function unit, the core network domain management function unit, or the MnS producer in the embodiments shown in FIG. 5 to FIG. 7. The input/output interface 520 is configured to implement sending and/or receiving related operations performed by the first network management device in the foregoing method embodiments, for example, sending and/or receiving related operations performed by the first network management device, the RAN domain management function unit, the core network domain management function unit, or the MnS producer in the embodiments shown in FIG. 5 to FIG. 7.

In another solution, the chip system 500 is configured to implement an operation performed by the second network management device in the foregoing method embodiments.

For example, the logic circuit 510 is configured to implement a processing-related operation performed by the second network management device in the foregoing method embodiments, for example, a processing-related operation performed by the second network management device, the cross-domain management function unit, or the MnS consumer in the embodiments shown in FIG. 5 to FIG. 7. The input/output interface 520 is configured to implement sending and/or receiving related operations performed by the second network management device in the foregoing method embodiments, for example, sending and/or receiving related operations performed by the second network management device, the cross-domain management function unit, or the MnS consumer in the embodiments shown in FIG. 5 to FIG. 7.

An embodiment of this application further provides a computer-readable storage medium. The computer-readable storage medium stores computer instructions used to implement the method performed by the second network management device or the first network management device in the foregoing method embodiments.

For example, when the computer program is executed by the computer, the computer can implement the method performed by the second network management device or the first network management device in the foregoing method embodiments.

An embodiment of this application further provides a computer program product, including instructions. When the instructions are executed by a computer, the method performed by the second network management device or the first network management device in the foregoing method embodiments is implemented.

An embodiment of this application further provides an intent management system. The system includes the first network management device and the second network management device in the foregoing embodiments. For example, the system includes the MnS producer and the MnS consumer, or the RAN domain management function unit and the cross-domain management function unit, or the core network domain management function unit and the cross-domain management function unit, or the first network management device and the second network management device in the embodiments shown in FIG. 5 to FIG. 7.

Optionally, the system further includes an external application server. For example, the system includes the APP in the embodiment shown in FIG. 6.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by the computer, or a data storage device, for example, a server, a data center, or the like integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An intent management method, comprising:
receiving, by a first network management device, an expectation object and an expectation target from a second network management device, wherein the expectation target is user quality of experience that the expectation object needs to satisfy, and the expectation object comprises at least one of the following: an area, a user group, a user, a service, and a network; and
managing, by the first network management device, a network to satisfy the expectation target.

2. The method according to claim 1, wherein when the expectation object is the area, the user quality of experience that the expectation object needs to satisfy is user quality of experience that a user or a user group in the area needs to satisfy;
when the expectation object is the user group, the user quality of experience that the expectation object needs to satisfy is user quality of experience that a user in the user group needs to satisfy;
when the expectation object is the user, the user quality of experience that the expectation object needs to satisfy is user quality of experience that the user needs to satisfy;
when the expectation object is the service, the user quality of experience that the expectation object needs to satisfy is user quality of experience that a user who uses the service needs to satisfy; or
when the expectation object is the network, the user quality of experience that the expectation object needs to satisfy is user quality of experience that a user, a user group, or a service of the network needs to satisfy.

3. The method according to claim 2, wherein
when the expectation object is the area, information about the expectation object comprises area information, wherein the area information indicates the area, and the area information comprises geographic location information or longitude, latitude, and altitude information;
when the expectation object is the user group, information about the expectation object comprises a user group identifier, wherein the user group identifier indicates the user group;
when the expectation object is the user, information about the expectation object comprises a user identifier, wherein the user identifier indicates the user;
when the expectation object is the service, information about the expectation object comprises a service identifier, wherein the service identifier indicates the service, and the service identifier comprises a quality of service flow identifier or a service flow identifier; or
when the expectation object is the network, information about the expectation object comprises a network identifier, wherein the network identifier indicates the network.

4. The method according to any one of claims 1 to 3, wherein the expectation target comprises a user quality of experience target, and the user quality of experience target comprises at least one of the following: a channel quality indicator, a corruption duration metric, a successive loss of real-time transport protocol packets, a frame rate, jitter duration, synchronization loss duration, round-trip time, an average codec bitrate, call setup time, an average throughput, an initial playout delay, a buffer level, a playout delay for media start-up, an application layer buffer level, corruption duration, rebuffering duration, initial buffering duration, frame rate deviation jitter duration, and content access/switch time.

5. The method according to claim 4, wherein the expectation target further comprises a first context, and the first context comprises an available physical resource block and/or a signal to interference plus noise ratio.

6. The method according to claim 5, wherein when the expectation object is the area, the first context indicates at least one of the following: a difference between physical resource block utilization rates of cells in the area is less than or equal to a first threshold; a difference between quantities of radio resource connected users in the cells in the area is less than or equal to a second threshold; an average signal to interference plus noise ratio of a cell in the area is greater than or equal to a third threshold; and an average signal to interference plus noise ratio of the user in the area is greater than or equal to a fourth threshold;
when the expectation object is the user group, the first context indicates at least one of the following: an average signal to interference plus noise ratio of the user group is greater than or equal to a fifth threshold; and an average signal to interference plus noise ratio of the user in the user group is greater than or equal to a sixth threshold;
when the expectation object is the user, the first context indicates: an average signal to interference plus noise ratio of the user is greater than or equal to a seventh threshold; or
when the expectation object is the area and the user group, the first context indicates at least one of the following: a difference between physical resource block utilization rates of user groups in the area is less than or equal to an eighth threshold; and a difference between quantities of radio resource connected users in the user groups in the area is less than or equal to a ninth threshold.

7. The method according to any one of claims 1 to 6, wherein the method further comprises:
receiving, by the first network management device, a second context from the second network management device, wherein the second context comprises at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

8. The method according to claim 3, wherein the expectation object and the expectation target indicate:
a ratio of a quantity of users in the area who satisfy a user quality of experience target to a quantity of users in the area;
a ratio of a quantity of user groups in the area that satisfy a user quality of experience target to a quantity of user groups in the area;
a ratio of a quantity of users in the user group who satisfy a user quality of experience target to a quantity of users in the user group;
a ratio of a quantity of users who use the service and who satisfy a user quality of experience target to a quantity of users who use the service;
the user satisfies a user quality of experience target;
an average value of user quality of experience in a preset time satisfies a user quality of experience target;
a ratio of a quantity of users in the area who use the service and who satisfy a user quality of experience target to a quantity of users in the area who use the service;
a ratio of a quantity of users in the user group who use the service and who satisfy a user quality of experience target to a quantity of users in the user group who use the service;
the user who uses the service satisfies a user quality of experience target;
an average value of quality of experience of the user who uses the service in a preset time period satisfies a user quality of experience target;
a ratio of a quantity of users of the network who satisfy a user quality of experience target to a quantity of users of the network; or
a ratio of a quantity of user groups of the network that satisfy a user quality of experience target to a quantity of user groups of the network.

9. The method according to any one of claims 1 to 8, wherein the method further comprises:
receiving, by the first network management device, user information from the second network management device, wherein the user information is information about a user associated with the expectation object; and
the managing, by the first network management device, a network to satisfy the expectation target comprises:
managing, by the first network management device, the network based on the user information to satisfy the expectation target.

10. The method according to claim 9, wherein the user information comprises at least one of the following:
information about a vehicle-to-everything user, information about an uncrewed aerial vehicle user, and information about a wireless network user, wherein
the information about the vehicle-to-everything user comprises user identification information, user location information, user movement trajectory information, and user navigation information;
the information about the uncrewed aerial vehicle user comprises user identification information, uncrewed aerial vehicle flight path information, climate information, no-fly zone information, and flight zone load information; and
the information about the wireless network user comprises user identification information, user movement trajectory information, user mobility information, a user priority, and a user service type.

11. An intent management method, comprising:
determining, by a second network management device, an expectation target and an expectation object, wherein the expectation target is user quality of experience that the expectation object needs to satisfy, and the expectation object comprises at least one of the following: an area, a user group, a user, a service, and a network; and
sending, by the second network management device, the expectation target and the expectation object to a first network management device.

12. The method according to claim 11, wherein when the expectation object is the area, the user quality of experience that the expectation object needs to satisfy is user quality of experience that a user or a user group in the area needs to satisfy;
when the expectation object is the user group, the user quality of experience that the expectation object needs to satisfy is user quality of experience that a user in the user group needs to satisfy;
when the expectation object is the user, the user quality of experience that the expectation object needs to satisfy is user quality of experience that the user needs to satisfy;
when the expectation object is the service, the user quality of experience that the expectation object needs to satisfy is user quality of experience that a user who uses the service needs to satisfy; or
when the expectation object is the network, the user quality of experience that the expectation object needs to satisfy is user quality of experience that a user, a user group, or a service of the network needs to satisfy.

13. The method according to claim 12, wherein
when the expectation object is the area, information about the expectation object comprises area information, wherein the area information indicates the area, and the area information comprises geographic location information or longitude, latitude, and altitude information;
when the expectation object is the user group, information about the expectation object comprises a user group identifier, wherein the user group identifier indicates the user group;
when the expectation object is the user, information about the expectation object comprises a user identifier, wherein the user identifier indicates the user;
when the expectation object is the service, information about the expectation object comprises a service identifier, wherein the service identifier indicates the service, and the service identifier comprises a quality of service flow identifier or a service flow identifier; or
when the expectation object is the network, information about the expectation object comprises a network identifier, wherein the network identifier indicates the network.

14. The method according to any one of claims 11 to 13, wherein the expectation target comprises a user quality of experience target, and the user quality of experience target comprises at least one of the following: a channel quality indicator, a corruption duration metric, a successive loss of real-time transport protocol packets, a frame rate, jitter duration, synchronization loss duration, round-trip time, an average codec bitrate, call setup time, an average throughput, an initial playout delay, a buffer level, a playout delay for media start-up, an application layer buffer level, corruption duration, rebuffering duration, initial buffering duration, frame rate deviation jitter duration, and content access/switch time.

15. The method according to claim 14, wherein the expectation target further comprises a first context, and the first context comprises an available physical resource block and/or a signal to interference plus noise ratio.

16. The method according to claim 15, wherein when the expectation object is the area, the first context indicates at least one of the following: a difference between physical resource block utilization rates of cells in the area is less than or equal to a first threshold; a difference between quantities of radio resource connected users in the cells in the area is less than or equal to a second threshold; an average signal to interference plus noise ratio of a cell in the area is greater than or equal to a third threshold; and an average signal to interference plus noise ratio of the user in the area is greater than or equal to a fourth threshold;
when the expectation object is the user group, the first context indicates at least one of the following: an average signal to interference plus noise ratio of the user group is greater than or equal to a fifth threshold; and an average signal to interference plus noise ratio of the user in the user group is greater than or equal to a sixth threshold;
when the expectation object is the user, the first context indicates: an average signal to interference plus noise ratio of the user is greater than or equal to a seventh threshold; or
when the expectation object is the area and the user group, the first context indicates at least one of the following: a difference between physical resource block utilization rates of user groups in the area is less than or equal to an eighth threshold; and a difference between quantities of radio resource connected users in the user groups in the area is less than or equal to a ninth threshold.

17. The method according to any one of claims 11 to 16, wherein the method further comprises:
sending, by the second network management device, a second context to the first network management device, wherein the second context comprises at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

18. The method according to claim 13, wherein the expectation object and the expectation target indicate:
a ratio of a quantity of users in the area who satisfy a user quality of experience target to a quantity of users in the area;
a ratio of a quantity of user groups in the area that satisfy a user quality of experience target to a quantity of user groups in the area;
a ratio of a quantity of users in the user group who satisfy a user quality of experience target to a quantity of users in the user group;
a ratio of a quantity of users who use the service and who satisfy a user quality of experience target to a quantity of users who use the service;
the user satisfies a user quality of experience target;
an average value of user quality of experience in a preset time satisfies a user quality of experience target;
a ratio of a quantity of users in the area who use the service and who satisfy a user quality of experience target to a quantity of users in the area who use the service;
a ratio of a quantity of users in the user group who use the service and who satisfy a user quality of experience target to a quantity of users in the user group who use the service;
the user who uses the service satisfies a user quality of experience target;
an average value of quality of experience of the user who uses the service in a preset time period satisfies a user quality of experience target;
a ratio of a quantity of users of the network who satisfy a user quality of experience target to a quantity of users of the network; or
a ratio of a quantity of user groups of the network that satisfy a user quality of experience target to a quantity of user groups of the network.

19. The method according to any one of claims 11 to 18, wherein the method further comprises:
determining, by the second network management device, that a user associated with the expectation object is associated with user information; and
sending, by the second network management device, the user information to a first network management device.

20. The method according to claim 19, wherein the user information comprises at least one of the following:
information about a vehicle-to-everything user, information about an uncrewed aerial vehicle user, and information about a wireless network user, wherein
the information about the vehicle-to-everything user comprises user identification information, user location information, user movement trajectory information, and user navigation information;
the information about the uncrewed aerial vehicle user comprises user identification information, uncrewed aerial vehicle flight path information, climate information, no-fly zone information, and flight zone load information; and
the information about the wireless network user comprises user identification information, user movement trajectory information, user mobility information, a user priority, and a user service type.

21. An intent management method, comprising:
determining, by a second network management device, an expectation target and an expectation object, wherein the expectation target is user quality of experience that the expectation object needs to satisfy, and the expectation object comprises at least one of the following: an area, a user group, a user, a service, and a network;
sending, by the second network management device, the expectation target and the expectation object to a first network management device; and
managing, by the first network management device, a network to satisfy the expectation target.

22. The method according to claim 21, wherein the method further comprises:
receiving, by the first network management device, a second context from the second network management device, wherein the second context comprises at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

23. The method according to claim 21 or 22, wherein the method further comprises:
determining, by the second network management device, that a user associated with the expectation object is associated with user information; and
sending, by the second network management device, the user information to a first network management device; and
the managing, by the first network management device, a network to satisfy the expectation target comprises: managing, by the first network management device, the network based on the user information to satisfy the expectation target.

24. An intent management system, comprising a first network management device and a second network management device, wherein the first network management device is configured to perform the method according to any one of claims 1 to 10, and the second network management device is configured to perform the method according to any one of claims 11 to 20.

25. A first network management device, comprising:
a transceiver unit, configured to receive an expectation object and an expectation target from a second network management device, wherein the expectation target is user quality of experience that the expectation object needs to satisfy, and the expectation object comprises at least one of the following: an area, a user group, a user, a service, and a network; and
a processing unit, configured to manage a network to satisfy the expectation target.

26. The device according to claim 25, wherein
the transceiver unit is further configured to receive a second context from the second network management device, wherein the second context comprises at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

27. The device according to claim 25 or 26, wherein
the transceiver unit is further configured to receive user information from the second network management device, wherein the user information is information about a user associated with the expectation object; and
the processing unit is specifically configured to manage the network based on the user information to satisfy the expectation target.

28. A second network management device, comprising:
a processing unit, configured to determine an expectation target and an expectation object, wherein the expectation target is user quality of experience that the expectation object needs to satisfy, and the expectation object comprises at least one of the following: an area, a user group, a user, a service, and a network; and
a transceiver unit, configured to send the expectation target and the expectation object to a first network management device.

29. The device according to claim 28, wherein
the transceiver unit is further configured to send a second context to the first network management device, wherein the second context comprises at least one of the following: a cell priority, an allowed cell list, a forbidden cell list, a user priority, an allowed user list, a forbidden user list, a user group priority, an allowed user group list, a forbidden user group list, a carrier priority, an allowed carrier list, a forbidden carrier list, a frequency band priority, an allowed frequency band list, a forbidden frequency band list, a network priority, an allowed network list, and a forbidden network list.

30. The device according to claim 28 or 29, wherein
the processing unit is further configured to determine that a user associated with the expectation object is associated with user information; and
the transceiver unit is further configured to send the user information to a first network management device.

31. A computer-readable storage medium, wherein the computer-readable storage medium stores instructions, and when the computer instructions are run on a computer, the computer is enabled to perform the method according to any one of claims 1 to 10, or perform the method according to any one of claims 11 to 20.

32. A chip, comprising:
a memory, configured to store a computer program; and
a processor, configured to read and execute the computer program stored in the memory, wherein when the computer program is executed, the processor performs the method according to any one of claims 1 to 10, or performs the method according to any one of claims 11 to 20.

33. A computer program product, wherein the computer program product comprises computer program code, and when the computer program code is run on a computer, the computer is enabled to perform the method according to any one of claims 1 to 10, or perform the method according to any one of claims 11 to 20.
